(19) **Europäisches Patentamt**
**European Patent Office**
**Office européen des brevets**

(11) **EP 3 460 279 B1**

(12) **EUROPEAN PATENT SPECIFICATION**

(45) Date of publication and mention of the grant of the patent:
**18.12.2019   Bulletin 2019/51**

(51) Int Cl.:
*F16D 25/06* (2006.01)   *F16D 23/06* (2006.01)

(21) Application number: **17193167.8**

(22) Date of filing: **26.09.2017**

(54) **GEAR ENGAGEMENT DEVICE FOR A MOTOR-VEHICLE GEARBOX, WITH DAMPENING OF THE RELATIVE ROTATIONS OF ITS COMPONENTS**

GETRIEBEEINGRIFFSVORRICHTUNG FÜR EIN KRAFTFAHRZEUGGETRIEBE MIT DÄMPFUNG DER RELATIVEN DREHUNGEN SEINER KOMPONENTEN

DISPOSITIF D'ENCLENCHEMENT DE VITESSES POUR UNE BOÎTE DE VITESSES D'UN VÉHICULE À MOTEUR, AVEC AMORTISSEMENT DES ROTATIONS RELATIVES DE SES COMPOSANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.03.2019   Bulletin 2019/13**

(73) Proprietor: **FCA Italy S.p.A.**
**10135 Torino (IT)**

(72) Inventors:
• **MONTALDO, Mr. Marco**
  **I-10024 Moncalieri (IT)**
• **CAMBONI, Mr. Gianluca**
  **I-10135 Torino (IT)**
• **RESTELLI, Mr. Davide**
  **I-10135 Torino (IT)**
• **PITTERA, Ms. Eliana**
  **I-10135 Torino (IT)**
• **PESOLA, Mr. Fabio**
  **I-10135 Torino (IT)**
• **GHIONE, Mr. Massimiliano**
  **I-10135 Torino (IT)**
• **GATTI, Mr. Gianmario**
  **I-10135 Torino (IT)**

(74) Representative: **Notaro, Giancarlo**
**Buzzi, Notaro & Antonielli d'Oulx**
**Corso Vittorio Emanuele II, 6**
**10123 Torino (IT)**

(56) References cited:
**US-A- 5 085 303       US-A- 5 267 636**
**US-A1- 2011 146 433**

**Description**

Field of the invention

The present invention relates to a gear engagement device for a motor-vehicle gearbox of the type, as disclosed for example in US 5 267 636, which comprises:

- a gearbox shaft,
- a gear wheel freely rotatably mounted on said shaft and carrying an auxiliary toothed crown,
- a hub connected rigidly and in rotation with said shaft,
- a gear engagement sleeve, connected in rotation to said hub and having an inner toothed crown, said sleeve being axially movable with respect to the hub from a neutral position towards a gear engaged position, in which said auxiliary toothed crown carried by said gear wheel is in engagement with said inner toothed crown of the sleeve, so as to connect in rotation said gearwheel to said shaft,
- a synchronizer ring connected in rotation to said hub and having an outer toothed crown axially interposed between the inner toothed crown of the sleeve and the auxiliary toothed crown of the gear wheel, said synchronizer ring having at least one conical surface cooperating with a conical portion rigidly connected to said gear wheel, for enabling a synchronized engagement of said inner toothed crown of the sleeve on said auxiliary toothed crown of the gear wheel when the sleeve is axially displaced towards said gear engaged position, and
- a device for driving the axial movement of the sleeve.

The present invention can be applied both to gearboxes with manual control, in which the above mentioned device for driving the axial movement of the sleeve is driven manually by the driver, as well as to gearboxes of the robotized type, in which the above-mentioned device for driving the axial movement of the sleeve is driven by an actuator, such as a hydraulic or electric actuator. The invention is applicable in general to any type of gearbox, including CVTs (Continuously Variable Transmissions) and ATs (Automatic Transmissions).

Prior art

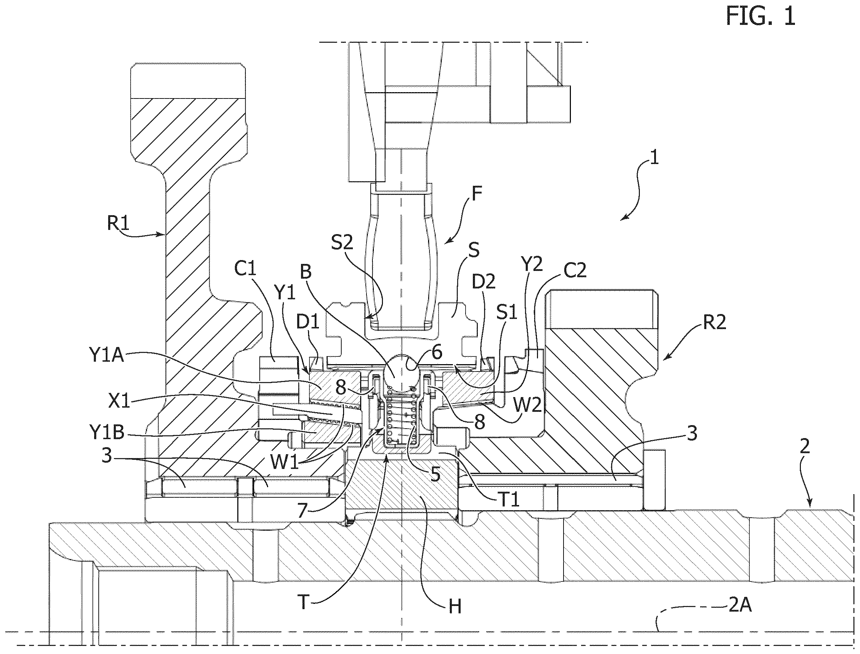

A gear engagement device according to a conventional art is shown in figures 1-4 of the annexed drawings.
In figure 1, reference numeral 1 generally designates a gear engagement device for a motor-vehicle gearbox. Reference numeral 2 designates one of the gearbox shafts. According to the conventional art, on shaft 2 there are freely rotatably mounted two gear wheels R1,R2 through roller bearings 3. Also according to the conventional technique, the two gear wheels R1,R2 are permanently engaging with two respective gear wheels (not shown) which are connected in rotation to another shaft of the gearbox (also not shown).
Again according to the conventional art, the gear engagement device 1 is used for selectively connecting in rotation either the gear wheel R1 or the gear wheel R2 to shaft 2.
Naturally, although the example shown herein refers to a device 1 for selectively engaging two different gears, the invention can be applied also to the case in which the device 1 is used for selecting a single gear.

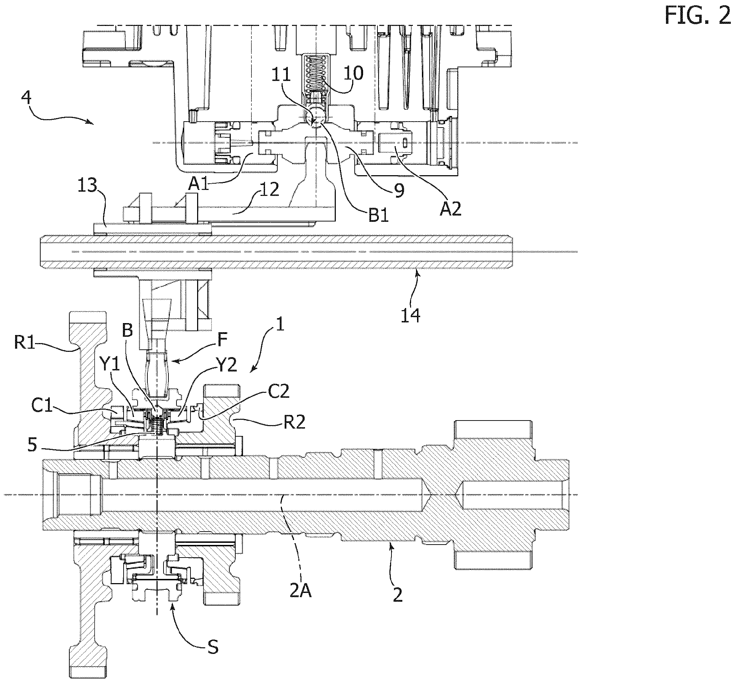

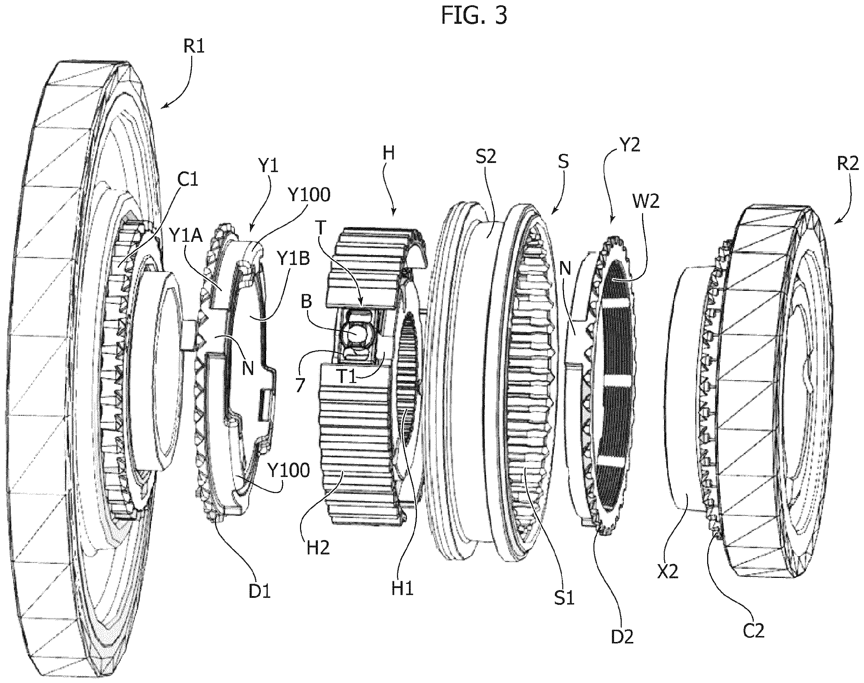

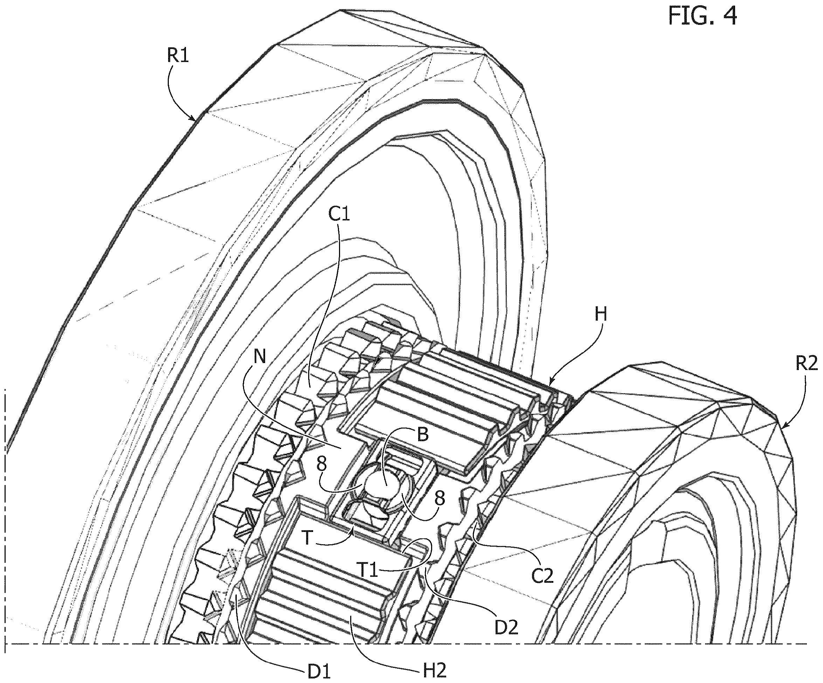

Figure 1 shows a view in cross-section of device 1 in a plane containing the axis 2A of shaft 2. Figure 2 shows the same detail as figure 1 in a smaller scale, along with its driving device. Figure 3 shows an exploded perspective view of the components of the device 1. Figure 4 shows a perspective view at an enlarged scale of a detail of the device 1.
In particular with reference to figure 1, the device 1 comprises a hub H rigidly connected in rotation to shaft 2. With reference also to figure 3, hub H has an inner toothed crown H1 coupled with a corresponding toothed crown of shaft 2, as well as an outer toothed crown H2 on which an inner toothed crown S1 of a gear engagement sleeve S is coupled. In this manner, sleeve S is coupled in rotation to hub H and shaft 2, but is free to slide relative to hub H.
In particular with reference to the example shown in figure 1, the sleeve S is movable from a central neutral position (shown in figure 1) either leftwardly (with reference to figure 1) to a gear engagement position in which wheel R1 is connected in rotation to shaft 2, or rightwardly in a gear engagement position in which wheel R2 is connected in rotation to shaft 2. The axial movement of sleeve S is driven by a driving device 4 shown in figure 2, whose structure and operation will be described hereinafter.
Also with reference to figures 1, 3, hub H is provided with a plurality of struts T each having a body axially guided on the hub H within a seat T1. Each strut T carries a cage 7, for example made of metal or plastic material, within which there are arranged an engagement element B, which is a ball in the illustrated example, and a spring 5 of any type, a helical spring in the illustrated example, which radially pushes ball B outwardly so as to cause it to engage into a cooperating main seat 6 in the inner surface of sleeve S. In the example illustrated herein, balls B are three in number and are equi-angularly spaced apart. The cage 7 includes a radially outer portion adapted to guide the movement of ball B and having opposite lateral walls 8, whose function will be illustrated in the following.

Also according to the conventional art, the gear wheels R1, R2 carry respective auxiliary toothed crowns C1, C2 which are rigidly connected in rotation to gear wheels R1, R2. Engagement of the gears takes place by coupling the inner toothed crown S1 of sleeve S, with the auxiliary toothed crown C1 of gear wheel R1 or with the auxiliary toothed crown C2 of the gear wheel R2.

In order to enable coupling with synchronized rotation of sleeve S either with the auxiliary toothed crown C1 or with the auxiliary toothed crown C2, two synchronizer rings Y1, Y2 are provided.

Referring in particular to figure 3, each synchronizer ring has a plurality of teeth N (such as three teeth N distributed at 120° relative to each other) on its outer surface, which teeth engage, with some clearance, cooperating slots in the inner surface of hub H, so that the synchronizer rings are connected in rotation to hub H.

The synchronizer rings Y1, Y2 have outer toothed crowns D1 and D2 which are axially interposed between the inner toothed crown S1 of hub H and, respectively, the auxiliary toothed crowns C1 and C2 of gear wheels R1 and R2.

The synchronizer ring Y2 has a conical inner surface W2 cooperating with a conical portion X2 of the respective gear wheel R2 (see figure 3).

The synchronizer ring Y1 is made by two concentric rings Y1A and Y1B rigidly connected to each other by means of connecting portions Y100 and having opposite and spaced apart conical surfaces W1 cooperating with the inner and outer conical surfaces of a ring X1 (see figure 1), which is rigidly connected to the gear wheel R1.

In operation, when the sleeve S is moved from its neutral position towards a gear engagement position, such as towards gear wheel R2, during a first part of the axial movement of sleeve S, balls B remain within their seats 6 and the struts T of hub H move axially within their seats T1 (figures 1 and 3) in the outer surface of the hub, until when each struts T comes in contact with one of its lateral walls 8 against the synchronizer ring Y2. After that this contact has taken place, further movement of sleeve S towards gear wheel R2 causes each ball B to come out of its seat 6 against the action of the associated spring 5. The profile of each seat 6 is configured so that the engagement of ball B, biased by spring 5, against one side of seat 6, when the ball B is not yet completely come out of seat 6, causes an axial force being applied by each strut T against the synchronizer ring Y2, which gives rise to a pre-synchronizing step, in advance with respect to engagement of the toothed crown D2 of the synchronizer ring by the sleeve S. In this pre-synchronizing step, the axial force acting on the synchronizer ring causes the speed of rotation of gear wheel R2 to get progressively closer to the rotational speed of the synchronizer ring Y2 and sleeve S. In the subsequent synchronizing step, the axial force which causes actual synchronization is applied by the inner toothed crown of the sleeve S against the outer toothed crown of the synchronizer ring Y2. When the two rotational speeds become the same, sleeve S can move axially beyond toothed crown D2 of the synchronizer ring Y2, up to synchronized engagement with the toothed crown C2 of the gear wheel R2, which is obtained in the final axial position of sleeve S.

In case the sleeve S is moved towards the gear wheel R1, the operation is similar, with the only difference that in this case the synchronizer ring Y1 engages the two outer and inner conical surfaces of ring X1 connected to the gear wheel R1. Solutions also are known in which a configuration with three friction cones is provided, in which the inner ring Y1B is engaged with friction against an inner conical surface formed in the gear wheel similarly to ring Y2.

Figure 2 shows a view in cross-section of an exemplary device 4 for driving the axial movement of sleeve S, which makes use of two hydraulic actuators A1, A2. The hydraulic actuators are used for moving a driving member 9 from a central neutral position (shown in figure 2) towards a gear engaged condition in one direction or in the other, for engaging respective gears. A reference of the neutral position of the driving member 9 is given by a ball B1 biased by a helical spring 10 within a seat 11 of the driving member 9. The driving member 9 is operatively connected by means of a transmission element 12 to a bush 13 which is slidable on a stem 14. Bush 13 carries a fork F whose terminal end engages an outer peripheral slot S2 of sleeve S.

During operation of the driving member 9, the hydraulic actuators A1, A2 which drive the movement of a fork F can be actuated in one direction or the other, in order to selectively connect a gear wheels R1, R2 to shaft 2.

Various alternative solutions are known different from that which has been described herein by way of example. In particular, solutions are known in which the driving member is directly formed on element 14, which is rigidly connected to fork F.

Technical problem

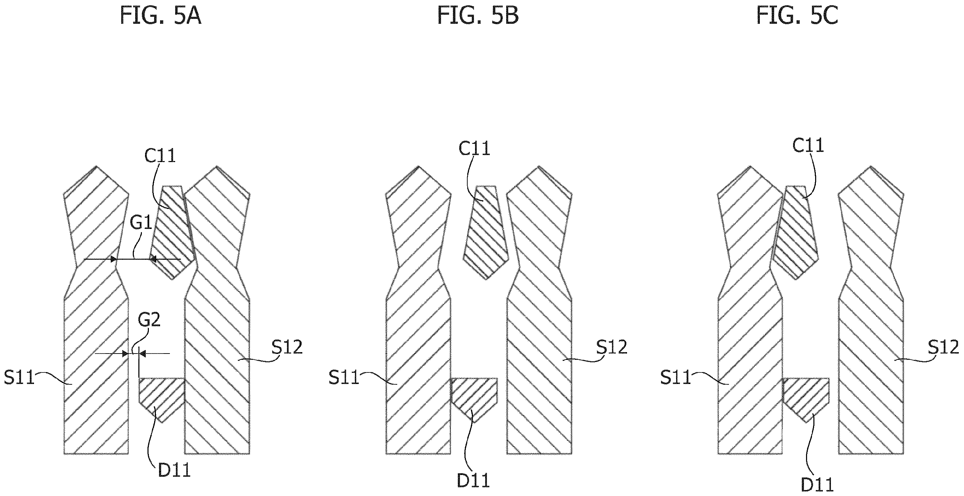

The technical problem which is at the basis of the present invention can be better understood by referring to figures 5A-5C. Figure 5A diagrammatically shows a gear engagement condition in which a tooth C11 of the auxiliary toothed crown C1 belonging to gear wheel R1 is engaged between two teeth S11 and S12 of the inner toothed crown S1 of sleeve S. This figure also shows a tooth D11 of the outer toothed crown D1 of the synchronizer ring Y1 arranged between two teeth S11 and S12.

As shown in the drawings, there is a clearance along the circumferential direction between the teeth of sleeve S, the teeth of the auxiliary toothed crown C1 and the teeth of the outer toothed crown D1 of the synchronizer ring Y1. In particular, there is a clearance G1 for which, as diagrammatically shown, each tooth C11 is received between the two teeth S11, S12. Each tooth D11 is also received between the two teeth S11, S12 with a clearance G2.

In normal operation of the transmission, tooth C11 is in constant contact with tooth S12, thereby enabling the transmission of a torque. However in case of variations of the transmitted torque, as a result of an inversion of the direction of transmission of the torque or torsional oscillations, for example due to a release of the accelerator pedal, a relative rotation between sleeve S and the auxiliary toothed crown C1 is originated, by which the above mentioned clearance is taken up.

The above described clearance take-up generates an undesired noise. The object of the present invention is that of overcoming this technical problem.

Summary of the invention

In view of overcoming the above mentioned technical problem, the present invention provides a gear engagement device having all the features which have been indicated at the beginning of the present description and further characterized in that said device is configured so that in said gear engagement position, the conical surface of the synchronizer ring or a front surface of the sleeve are axially pressed in friction contact against said conical portion of said gear wheel or against an engagement surface of the gear wheel, respectively, so that this friction contact tends to brake any relative rotations between said gear wheel and said synchronizer ring or between said gear wheel and said sleeve which may take place in transitional conditions of operation of the gearbox which involve inversions or abrupt variations of the transmitted torque, due to the clearance between the teeth of the auxiliary toothed crown of the gear wheel, the teeth of the synchronizer ring and the teeth of the sleeve.

Due to the above mentioned features, the device according to the present invention provides a dampening of the relative rotations between the components of the device during the above described transitional stages, which enables the noise of the known devices to be reduced or completely eliminated.

According to a technique which, as discussed above, is known per se, the engagement device of the invention preferably comprises a plurality of struts axially slidably carried by the hub and including engagement elements biased radially outwardly by respective springs for engaging cooperating main seats in the inner surface of the sleeve. In a first embodiment of the present invention, the gear engagement device is characterized by that the inner surface of the sleeve is configured with an engagement track for each of said engagement elements carried by the hub, each engagement track having:

- a track portion extending axially on the inner surface of the sleeve starting from said main seat and terminating at one end thereof opposite to said main seat with an auxiliary seat which is reached by the respective engagement element when gear engagement is completed,
- said auxiliary seat being shaped so that, in the gear engagement condition, said auxiliary seat reacts to the force of the biasing spring of the respective engagement element by giving rise to a force axial component which pushes the respective struts axially against said synchronizer ring and hence the synchronizer ring against the conical portion of said gear wheel, so as to create said friction contact which opposes said relative rotations.

Therefore, in this embodiment of the invention, the synchronizer ring solves an additional function with respect to the conventional solutions when the sleeve reaches its gear engagement final position.

Preferably, the device comprises means for locking the sleeve axially in the condition in which each of said engagement elements pushes the synchronizer ring axially. For example, said means for locking the sleeve axially comprise a plurality of stop elements carried by the hub and pushed radially outwardly by respective springs into engagement with further seats on the inner surface of the sleeve. Alternatively, the means for locking the sleeve axially are included in said driving device for driving the axial movement of the sleeve.

In a further embodiment of the present invention, the driving device for driving the axial movement of the sleeve is configured so that in the gear engagement position it keeps on pushing a surface of the sleeve in friction contact with a surface of the gear wheel, so as to hinder said relative rotations.

Also in a further embodiment, the device (4) for driving the axial movement of the sleeve (S) comprises an actuating hydraulic cylinder (A1, A2) and is configured for keeping on maintaining the actuating cylinder active or for activating said cylinder in said transitional stages where the clearance is taken up.

As clearly evident, an important advantage of the present invention lies in that the noise problem is solved without a complication in construction, but simply by exploiting the components which are already provided in the gear engagement device. In particular, with reference to the first embodiment which has been described above, the desired dampening effect is obtained by using the synchronizer ring, i.e. a component which in the known solutions does not fulfill any function in the gear engagement conditions.

Detailed description of preferred embodiments

Further features and advantages of the present invention will become apparent from the description which follows with reference to the annexed drawings, given purely by way of non limiting example, in which:

- figures 1-4, which have been described above, show a gear engagement device according to the conventional art,
- figures 5A-5C, which have been described above, show the technical problem which is at the basis of the present invention,
- figure 6 shows a view similar to that of figure 1 with reference to a first embodiment of the present invention,
- figure 7 shows a detail of figure 6 at an enlarged scale,
- figure 8 shows a further detail of figure 6 at an enlarged scale,
- figure 9 shows a cross-sectional view at an enlarged scale according to line IX-IX of figure 6,
- figure 10 shows a view in cross-section along line X-X of figure 9,
- figure 11 shows a view at an enlarged scale of a detail shown in figure 6.

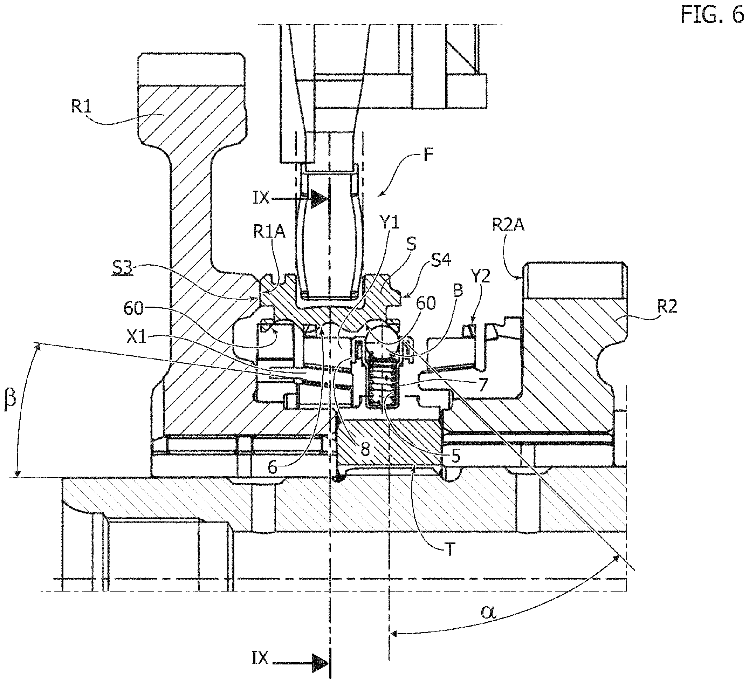

Figures 1-5C have been described in the foregoing. In figures 6-11, parts corresponding to those shown in figures 1-5C relating to the prior art are designated by the same references.

Figure 6 shows a first embodiment of the device according to the present invention. With respect to the known solution shown in figure 1, the main difference lies in that in addition to the main seat 6 which provides a reference for the neutral position of sleeve S, the inner surface of sleeve S has also two auxiliary seats 60 which are engaged by ball B in the gear engagement positions associated to the respective gear wheels R1, R2. Naturally, in the case in which the sleeve S is provided for engaging a single gear wheel, it would be provided with a single auxiliary seat 60.

For each ball B, the inner surface of sleeve S, has an engagement track which extends starting from the main seat 6 in one direction and the other towards a respective auxiliary seat 60. The above mentioned engagement track is shaped so that during an engagement maneuver the ball B reaches the auxiliary seat 60 only when the sleeve S is close to reach a position of complete engagement with the gear wheel. Each auxiliary seat 60 is shaped so that in the gear engagement condition, said auxiliary seat 60 reacts to the force of the spring 5 biasing the respective ball B by giving rise to a force axial component which pushes the synchronizer ring Y1 or Y2 against the conical portion of the gear wheel R1 or R2, so as to create a friction contact which opposes the relative rotations of the components of device 1.

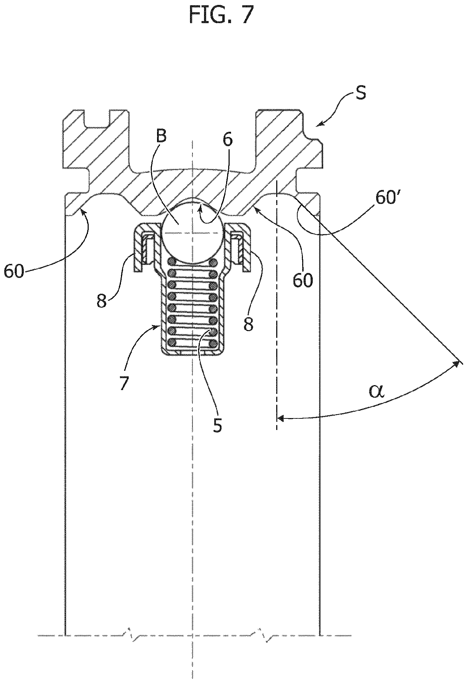

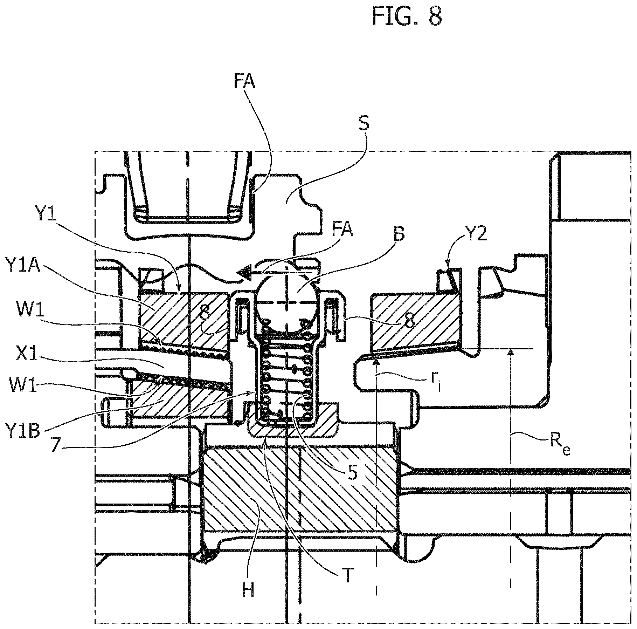

In the illustrated example of figure 6, the sleeve S is in the position in which it engages the gear wheel R1. In particular with reference to the detailed view of a figure 7, each auxiliary seat 60 has a surface 60' which is inclined by an angle $\alpha$ with respect to a radial direction. As shown in further detail in figure 8, the inclination of a surface 60' causes a reaction to the force applied by spring 5 by giving rise to an axial force FA, for which ball B axially pushes the outer wall 8 against to the synchronizer ring Y1; the synchronizer ring Y1 is thus compelled to engage by friction contact on the conical surfaces of element X1.

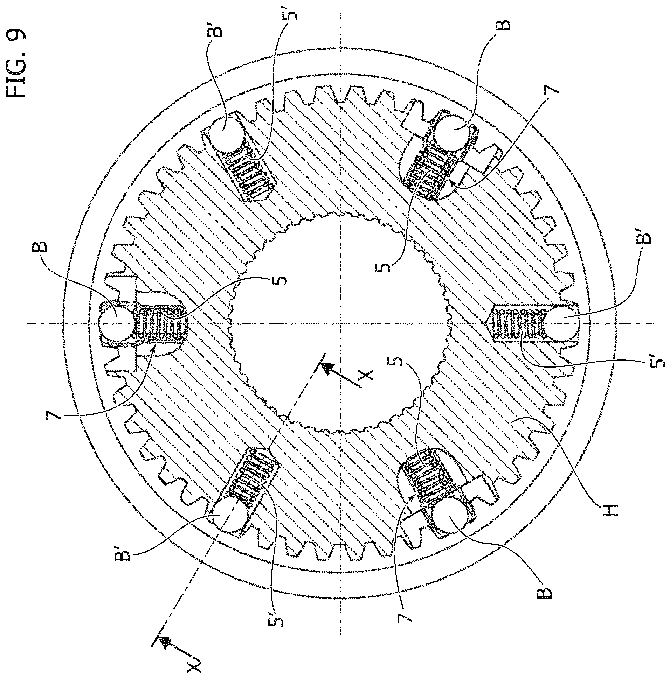

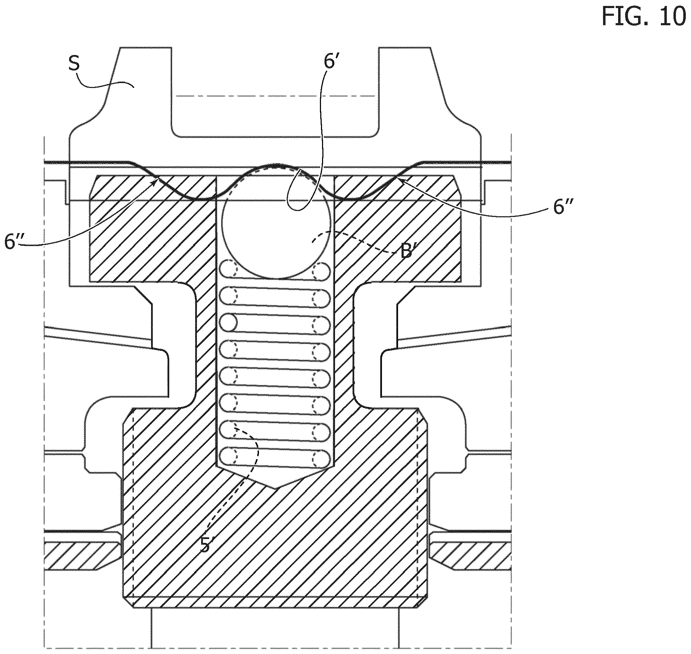

Naturally, it is necessary that the sleeve S is held in the position shown in figure 6 when ball B pushes the synchronizer ring Y leftwarldly (with reference to figure 6). Otherwise, it could happen that ball B is pushed by spring 5 so as to cause a sleeve S to move rightwarldly (with reference to figure 6). A possible solution to this problem is shown in figures 9, 10. As shown in figure 9, in this solution in addition to balls B biased by springs 5, hub H also has further balls B' biased by respective springs 5' with balls B' being angularly arranged between balls B. As shown in the detailed view of a figure 10, each ball B' is engaged into a seat 6' of sleeve S in the neutral position of sleeve S, whereas in each of the two gear engagement positions of the sleeve S, ball B' is engaged on an inclined surface 6" which is shaped so as to oppose a return of sleeve S to its neutral position. The force of each spring 5' is such that the driving device 4 is perfectly able to bring sleeve S back to its neutral position by overcoming the forces of springs 5'. However, springs 5' are sufficient for preventing that in the condition shown in figure 6 balls B biased by springs 5 can move the sleeve S towards its neutral position. During the stage in which the clearance is taken up, as shown in figure 5B, at first a clearance G2 is taken up so that tooth D11 comes in contact with tooth S11. After that, teeth D11 and S11 move together and clearance G1 is completely recovered with the contact between teeth C11 and S11 (as shown in figure 5C). However, due to the invention, these movements are dampened and do not cause any appreciable noise.

In an embodiment alternative to the solution of figures 9,10 the sleeve S can be held axially in a fixed position simply as a results of the action of the driving device 4. For example, with reference to figure 2, the driving member 9 can have two auxiliary seats for engagement of the ball B1 in the gear engagement positions of a fork F. Alternatively, the transmission forming part of the driving device 4 could involve frictions which are sufficient for preventing in movement of sleeve S caused by springs 5.

In another alternative embodiment, the sleeve S could be of the conventional type, i.e. without auxiliary seats 60. Also with reference to figure 6, in the gear engaged condition a friction contact between an annular front surface S3 of sleeve S and a front surface R1A of gear wheel R1 (or between and annular front surface S4 of sleeve S and a front surface R2A of gear wheel R2) could be provided. The driving device 4 could be designed so that, in the gear engaged condition, the fork F keeps on pushing sleeve S axially so as to provide the friction contact between surfaces S3 and R1A. This contact tends to dampen the relative rotations between the gear wheel R1 and the sleeve S when they tend to take place. In conditions of normal operation there is no sliding contact between surface S3 and surface R1A since wheel R1 and sleeve S rotate at the same speed.

Reverting to figures 5A, 5C, the solution which provides a friction sliding between the engaged gearwheel and sleeve S enables the relative rotation to be opposed already during the stage in which clearance G is taken up. In the case of the first embodiment described above, when the balls B push a synchronizer ring axially on the conical surface or the conical surface of the engaged gear wheel, the relative rotation of the synchronizer ring with respect to the sleeve is slowed down, so that a dampened movement is obtained in the subsequent stage when clearance G2 is taken up, which happens between the condition shown in figure 5B and the condition shown in figure 5C.

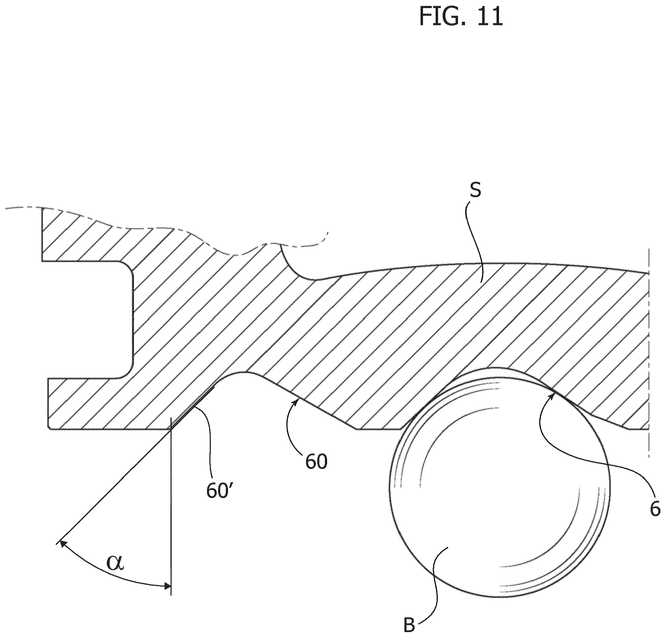

Still reverting to the first embodiment which has been described above, figure 11 shows an actual embodiment of the inner track of the inner surface of sleeve S, for engagement of ball B.

When ball B is in engagement against seat 60', the axial force FA (see figure 8) gives rise to a braking torque expressed by the subsequent relation:

$$C_s = \frac{2}{3} \times \left( R_e{}^3 - r_i{}^3 \right) / \left( \sin\beta \times \left( R_e{}^2 - r_i{}^2 \right) \right) \times \mu \times F_a$$

where $R_e$ and $r_i$ are the maximum radius and the minimum radius of the conical surface of the synchronizer ring (see figure 8).

In an actual embodiment of the invention, angle $\alpha$ shown in figure 11 can have a value between 45° and 40°.

Due to the features described in the foregoing, the gear engagement device according to the present invention enables dampening of the relative rotations of its components during transitional stages in which variations of the transmitted torque take place, so as to eliminate the noise originated therefrom, with extremely simple and efficient means. An important advantage of the present invention lies in that the noise problem is solved without any complications in construction, but simply by relying on components that are already present in any gear engagement device.

Naturally, while the principle of the invention remains the same, the details of construction and the embodiments may widely vary with respect to what has been described and shown purely by way of example, without departing from the scope of the present invention, as defined in the annexed claims.

**Claims**

1. Gear engagement device (1) for a motor-vehicle gearbox, the device comprising:

   - a gearbox shaft (2),
   - a gear wheel (R1, R2) freely rotatably mounted on said shaft (2) and carrying an auxiliary toothed crown (C1, C2),
   - a hub (H) rigidly connected in rotation to said shaft (2),
   - a gear engagement sleeve (S) connected in rotation to said hub (H) and having an inner toothed crown (S1), said sleeve (S) being axially movable relative to the hub (H) from a neutral position towards a gear engagement position in which said auxiliary toothed crown (C1, C2) carried by said gear wheel (R1, R2) is in engagement with the inner toothed crown (S1) of the sleeve (S), so as to connect in rotation said gear wheel (R1, R2) to said shaft (2),
   - a synchronizer ring (Y1, Y2) connected in rotation to said hub (H), and having an outer toothed crown (D1, D2) axially interposed between the inner toothed crown (S1) of the sleeve (S) and the auxiliary toothed crown (C1, C2) of the gear wheel (R1, R2), said synchronizer ring having at least one conical surface (W1, W2) cooperating with a conical portion (X1, X2) rigidly connected to said gear wheel (R1, R2) for synchronized engagement of said inner toothed crown (S1) of the sleeve (S) on said auxiliary toothed crown (C1, C2) of the gear wheel (R1, R2) when the sleeve (S) is axially moved towards said gear engagement position,
   - a driving device (4) for driving the axial movement of the sleeve (S),

   **characterized in that** said device (1) is configured so that in said gear engagement position the conical surface (W1, W2) of said synchronizer ring (Y1, Y2) or a front surface (S3, S4) of said sleeve (S) are pressed axially in friction contact against said conical portion (X1, X2) of said gear wheel (R1, R2) or against a respective engagement surface (R1A, R2A) of the gear wheel (R1, R2), respectively, so that this friction contact tends to brake any relative rotations between said gear wheel (R1, R2) and said synchronizer ring (Y1, Y2) or between said gear wheel (R1, R2) and said sleeve (S), which relative rotations may take place in transitional conditions of operation of the gearbox which involve inversions or abrupt variations of the transmitted torque, due to a clearance between teeth of the auxiliary toothed crown (C1, C2) of the gear wheel (R1, R2), teeth of the synchronizer ring (Y1, Y2) and teeth of the sleeve (S).

2. Gear engagement device (1) according to claim 1, comprising a plurality of struts (T) slidably axially carried by the hub (H) and including engagement elements (B) radially biased outwardly by respective springs (5) for engaging cooperating main seats (6) of the inner surface of the sleeve (S),
**characterized in that** the inner surface of the sleeve (S) is configured with an engagement track for each of said engagement elements (B) carried by the hub (H), each engagement track having:

   - a track portion extending axially on the inner surface of the sleeve (S) starting from said main seat (6) and terminating at one end thereof opposite to said main seat (6) with an auxiliary seat (60) which is reached by the respective engagement element (B) when a gear engagement is completed,
   - said auxiliary seat (60) being shaped so that in the gear engagement condition said auxiliary seat (60) reacts to the force of the spring (5) biasing the respective engagement element (B) by giving rise to a force axial component (FA) which pushes the respective strut axially against said synchronizer ring (Y1, Y2) and hence the synchronizer ring against the conical portion (X1, X2) of the gear wheel (R1, R2) so as to generate said friction contact which opposes said relative rotations.

3. Gear engagement device (1) according to claim 2, **characterized in that** it comprises means for locking the sleeve (S) axially in the condition in which each of said engagement elements (B) pushes the synchronizer ring (Y1, Y2) axially.

4. Gear engagement device (1) according to claim 3, **characterized in that** said means for locking the sleeve (S) axially comprise a plurality of stop elements (B') carried by the hub (H) and biased radially outwardly by respective springs (5') into engagement with respective third seats (6') on the inner surface of the sleeve (S).

5. Gear engagement device (1) according to claim 3, **characterized in that** said means for locking the sleeve (S) axially are included within said driving device (4) for driving the axial movement of the sleeve (S).

6. Gear engagement device (1) according to claim 1, **characterized in that** said driving device (4) for driving the axial movement of the sleeve (S) is configured so that in the gear engagement position it keeps on pushing a surface (S3, S4) of sleeve (S) in friction contact against a surface (R1A, R2A) of the gear wheel (R1, R2) so as to oppose said relative rotations.

7. Gear engagement device (1) according to claim 6, **characterized in that** said driving device (4) for driving the axial movement of the sleeve (S) comprises an actuating hydraulic cylinder (A1, A2) and is configured for keeping the actuating cylinder active or for activating said cylinder in transitional stages in which said clearance is taken up.


**Patentansprüche**

1. Getriebeeingriffsvorrichtung (1) für ein Kraftfahrzeuggetriebe, wobei die Vorrichtung umfasst:

   - eine Getriebewelle (2)
   - ein Getrieberad (R1, R2), das frei drehbar an der Welle (2) montiert ist und einen Hilfszahnkranz (C1, C2) trägt,
   - eine Nabe (H), die fest in Drehung mit der Welle (2) verbunden ist,
   - eine Getriebeeingriffsmuffe (S), die in Drehung mit der Nabe (H) verbunden ist und einen Innenzahnkranz (S1) aufweist, wobei die Muffe (S) axial relativ zu der Nabe (H) aus einer neutralen Position in Richtung einer Getriebeeingriffsposition verschiebbar ist, in der der Hilfszahnkranz (C1, C2), der von dem Getrieberad (R1, R2) getragen wird, in Eingriff mit dem Innenzahnkranz (S1) der Muffe (S) steht, um das Getrieberad (R1, R2) in Drehung mit der Welle (2) zu verbinden,
   - einen Synchronring (Y1, Y2), der in Drehung mit der Nabe (H) verbunden ist und einen Außenzahnkranz (D1, D2) aufweist, der sich axial zwischen dem Innenzahnkranz (S1) der Muffe (S) und dem Hilfszahnkranz (C1, C2) des Getrieberades (R1, R2) befindet, wobei der Synchronring mindestens eine konische Fläche (W1 W2) aufweist, die mit einem konischen Abschnitt (X1, X2), der steif mit dem Getrieberad (R1, R2) verbunden ist, für einen synchronisierten Eingriff des Innenzahnkranzes (S1) der Muffe (S) auf dem Hilfszahnkranz (C1, C2) des Getrieberades (R1, R2) zusammenwirkt, wenn die Muffe (S) axial in Richtung der Getriebeeingriffsposition geschoben wird,
- eine Antriebsvorrichtung (4) für den Antrieb der axialen Bewegung der Muffe (S),

**dadurch gekennzeichnet, dass** die Vorrichtung (1) so konfiguriert ist, dass in der Getriebeeingriffsposition die konische Fläche (W1, W2) des Synchronrings (Y1, Y2) oder eine Vorderseite (S3, S4) der Muffe (S) axial in Reibungskontakt gegen den konischen Abschnitt (X1, X2) des Getrieberades (R1, R2) bzw. gegen eine entsprechende Eingriffsfläche (R1A, R2A) des Getrieberades (R1, R2) gepresst wird, so dass dieser Reibungskontakt tendenziell alle relativen Drehungen zwischen dem Getrieberad (R1, R2) und dem Synchronring (Y1, Y2) oder zwischen dem Getrieberad (R1, R2) und der Muffe (S) unterbricht, wobei diese relativen Drehungen in Übergangszuständen bei Betätigung des Getriebes auftreten können, die Umkehrungen oder abrupte Änderungen des übertragenen Drehmoments beinhalten, aufgrund eines Spiels zwischen Zähnen des Hilfszahnkranzes (C1, C2) des Getrieberades (R1, R2), Zähnen des Synchronrings (Y1, Y2) und Zähnen der Muffe (S).

2. Getriebeeingriffsvorrichtung (1) nach Anspruch 1, umfassend eine Vielzahl von Streben (T), die gleitfähig axial von der Nabe (H) getragen werden und Eingriffselemente (B) aufweisen, die radial nach außen durch jeweilige Federn (5) vorgespannt werden, um zusammenwirkende Hauptsitze (6) der Innenfläche der Muffe (S) in Eingriff zu bringen, **dadurch gekennzeichnet, dass** die Innenfläche der Muffe (S) mit einer Eingriffsspur für jedes der Eingriffselemente (B) konfiguriert ist, die von der Nabe (H) getragen werden, wobei jede Eingriffsspur Folgendes aufweist:

- einen Spurabschnitt, der sich axial an der Innenfläche der Muffe (S) erstreckt, an dem Hauptsitz (6) beginnt und an einem Ende davon gegenüber dem Hauptsitz (6) endet, mit einem Hilfssitz (60), der von dem jeweiligen Eingriffselement (B) erreicht wird, wenn ein Getriebeeingriff vollständig ist,
- wobei der Hilfssitz (60) so geformt ist, dass der Hilfssitz (60) im Getriebeeingriffszustand auf die Kraft der Feder (5) reagiert, welche das jeweilige Eingriffselement (B) vorspannt, indem eine axiale Kraftkomponente (FA) entsteht, welche die jeweilige Strebe axial gegen den Synchronring (Y1, Y2) und damit den Synchronring gegen den konischen Abschnitt (X1, X2) des Getrieberades (R1, R2) schiebt, um so den Reibungskontakt zu erzeugen, der den relativen Drehungen entgegenwirkt.

3. Getriebeeingriffsvorrichtung (1) nach Anspruch 2, **dadurch gekennzeichnet, dass** sie Mittel zum axialen Fixieren der Muffe (S) in dem Zustand umfasst, in dem die einzelnen Eingriffselemente (B) axial gegen den Synchronring (Y1, Y) drücken.

4. Getriebeeingriffsvorrichtung (1) nach Anspruch 3, **dadurch gekennzeichnet, dass** die Mittel zum axialen Fixieren der Muffe (S) eine Vielzahl von Anschlagelementen (B') umfassen, die von der Nabe (H) getragen und von jeweiligen Federn (5') radial nach außen in Eingriff mit jeweiligen dritten Sitzen (6') an der Innenfläche der Muffe (S) vorgespannt werden.

5. Getriebeeingriffsvorrichtung (1) nach Anspruch 3, **dadurch gekennzeichnet, dass** die Mittel zum axialen Fixieren der Muffe (S) in der Antriebsvorrichtung (4) für den Antrieb der axialen Bewegung der Muffe (S) enthalten sind.

6. Getriebeeingriffsvorrichtung (1) nach Anspruch 1, **dadurch gekennzeichnet, dass** die Antriebsvorrichtung (4) für den Antrieb der axialen Bewegung der Muffe (S) so ausgelegt ist, dass sie in der Getriebeeingriffsposition eine Fläche (S3, S4) der Muffe (S) im Reibungskontakt weiter gegen eine Fläche (R1A, R2A) des Getrieberades (R1, R2) drückt, um den relativen Drehungen entgegenzuwirken.

7. Getriebeeingriffsvorrichtung (1) nach Anspruch 6, **dadurch gekennzeichnet, dass** die Antriebsvorrichtung (4) für den Antrieb der axialen Bewegung der Muffe (S) einen hydraulischen Betätigungszylinder (A1, A2) umfasst und dazu ausgelegt ist, den Betätigungszylinder aktiv zu halten oder den Zylinder in Übergangsstadien zu aktivieren, in welchen das Spiel aufgehoben wird.

**Revendications**

1. Dispositif d'engagement d'engrenage (1) pour une boîte de vitesses de véhicule automobile, le dispositif comprenant :

- un arbre de boîte de vitesses (2),
- une roue dentée (R1, R2) montée librement rotative sur ledit arbre (2) et portant une couronne dentée auxiliaire (C1, C2),

- un moyeu (H) relié rigidement en rotation audit arbre (2),

- un manchon d'engagement d'engrenage (S) relié en rotation audit moyeu (H) et ayant une couronne dentée intérieure (S1), ledit manchon (S) pouvant être déplacé axialement par rapport au moyeu (H) d'une position neutre vers une position d'engagement d'engrenage dans laquelle ladite couronne dentée auxiliaire (C1, C2) portée par ladite roue dentée (R1, R2) est engagée avec la couronne dentée intérieure (S1) du manchon (S), de manière à relier en rotation ladite roue dentée (R1, R2) audit arbre (2),

- un anneau de synchroniseur (Y1, Y2) relié en rotation audit moyeu (H) et ayant une couronne dentée extérieure (D1, D2) interposée axialement entre la couronne dentée intérieure (S1) du manchon (S) et la couronne dentée auxiliaire (C1, C2) de la roue dentée (R1, R2), ledit anneau de synchroniseur ayant au moins une surface conique (W1, W2) coopérant avec une partie conique (X1, X2) reliée rigidement à ladite roue dentée (R1, R2) pour un engagement synchronisé de ladite couronne dentée intérieure (S1) du manchon (S) sur ladite couronne dentée auxiliaire (C1, C2) de la roue dentée (R1, R2) lorsque le manchon (S) est déplacé axialement vers ladite position d'engagement d'engrenage,

- un dispositif d'entraînement (4) pour entraîner le mouvement axial du manchon (S),

**caractérisé en ce que** ledit dispositif (1) est configuré de sorte que, dans ladite position d'engagement d'engrenage, la surface conique (W1, W2) dudit anneau de synchroniseur (Y1, Y2) ou une surface avant (S3, S4) dudit manchon (S) soit pressée axialement en contact de frottement contre ladite partie conique (X1, X2) de ladite roue dentée (R1, R2) ou contre une surface d'engagement respective (R1A, R2A) de la roue dentée (R1, R2), respectivement, de sorte que ce contact de frottement tende à freiner des rotations relatives quelconques entre ladite roue dentée (R1, R2) et ledit anneau de synchroniseur (Y1, Y2) ou entre ladite roue dentée (R1, R2) et ledit manchon (S), lesquelles rotations relatives peuvent avoir lieu dans des conditions transitoires de fonctionnement de la boîte de vitesses qui impliquent des inversions ou des variations brusques de couple transmis, en raison d'un jeu entre des dents de la couronne dentée auxiliaire (C1, C2) de la roue dentée (R1, R2), des dents de l'anneau de synchroniseur (Y1, Y2) et des dents du manchon (S).

2. Dispositif d'engagement d'engrenage (1) selon la revendication 1, comprenant une pluralité de montants (T) supportés axialement de manière coulissante par le moyeu (H) et comportant des éléments d'engagement (B) sollicités radialement vers l'extérieur par des ressorts respectifs (5) pour s'engager avec des sièges principaux coopérants (6) de la surface intérieure du manchon (S),

**caractérisé en ce que** la surface intérieure du manchon (S) est configurée avec une voie d'engagement pour chacun desdits éléments d'engagement (B) portés par le moyeu (H), chaque voie d'engagement ayant :

- une partie de voie s'étendant axialement sur la surface intérieure du manchon (S) en partant dudit siège principal (6) et se terminant à une extrémité de celui-ci opposée audit siège principal (6) avec un siège auxiliaire (60) qui est atteint par l'élément d'engagement respectif (B) lorsqu'un engagement d'engrenage est terminé,

- ledit siège auxiliaire (60) étant conformé de sorte que, dans la condition d'engagement d'engrenage, ledit siège auxiliaire (60) réagisse à la force du ressort (5) sollicitant l'élément d'engagement respectif (B) en générant une composante axiale de force (FA) qui pousse axialement le montant respectif contre ledit anneau de synchroniseur (Y1, Y2) et pousse ainsi l'anneau de synchroniseur contre la partie conique (X1, X2) de la roue dentée (R1, R2) de manière à générer ledit contact de frottement qui s'oppose auxdites rotations relatives.

3. Dispositif d'engagement d'engrenage (1) selon la revendication 2, **caractérisé en ce qu'**il comprend des moyens de verrouillage axial du manchon (S) dans la condition dans laquelle chacun desdits éléments d'engagement (B) pousse l'anneau de synchroniseur (Y1, Y2) axialement.

4. Dispositif d'engagement d'engrenage (1) selon la revendication 3, **caractérisé en ce que** lesdits moyens de verrouillage axial du manchon (S) comprennent une pluralité d'éléments de butée (B') portés par le moyeu (H) et sollicités radialement vers l'extérieur par des ressorts respectifs (5') pour s'engager avec des troisièmes sièges respectifs (6') sur la surface intérieure du manchon (S).

5. Dispositif d'engagement d'engrenage (1) selon la revendication 3, **caractérisé en ce que** lesdits moyens de verrouillage axial du manchon (S) sont inclus dans ledit dispositif d'entraînement (4) pour entraîner le mouvement axial du manchon (S).

6. Dispositif d'engagement d'engrenage (1) selon la revendication 1, **caractérisé en ce que** ledit dispositif d'entraînement (4) pour entraîner le mouvement axial du manchon (S) est configuré de sorte que, dans la position d'engagement d'engrenage, il continue à pousser une surface (S3, S4) du manchon (S) en contact de frottement contre une surface (R1A, R2A) de la roue dentée (R1, R2) de manière à s'opposer auxdites rotations relatives.

7. Dispositif d'engagement d'engrenage (1) selon la revendication 6, **caractérisé en ce que** ledit dispositif d'entraînement (4) pour entraîner le mouvement axial du manchon (S) comprend un vérin hydraulique d'actionnement (A1, A2) et est configuré pour maintenir le vérin d'actionnement actif ou pour activer ledit vérin dans des étages de transition dans lesquels ledit jeu est compensé.

FIG. 1

FIG. 2

FIG. 3

FIG. 4

FIG. 5A           FIG. 5B           FIG. 5C

EP 3 460 279 B1

FIG. 6

FIG. 7

EP 3 460 279 B1

FIG. 8

FIG. 9

FIG. 10

EP 3 460 279 B1

FIG. 11

EP 3 460 279 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5267636 A